# EUROPEAN PATENT APPLICATION

(11) **EP 0 666 200 A2**
(43) Date of publication of application: **09.08.1995**
(21) Application number: 95300614.5
(22) Date of filing: 31.01.1995
(51) Int. Cl.: B60R 16/02

(54) **Distributed control apparatus, a method of transmitting data therein, and a vehicle including such an apparatus**

(30) Priority: 03.02.1994 GB 9402059
(71) Applicant: LUCAS INDUSTRIES PUBLIC LIMITED COMPANY, Solihull, West Midlands B91 3TX (GB)
(72) Inventor: Chidlow, Jonathan Gordon, Oakhill, Stoke-on-Trent, ST4 5BB (GB)
(74) Representative: Robinson, John Stuart

(57) **Abstract**

A distributed control system has a plurality of controllers (4-18) communicating via a communications link (20). At least one of the controllers is responsive to control switches and is arranged to transmit instructions onto the communications link (20). At least one of the controllers is responsive to instructions received via the communications link (20) for controlling functions local to that controller. The controllers (4-18) communicate using a scheme having a first word which identifies a class of functions to be controlled, a second word which identifies at least one function to be controlled and a third word which indicates what action is to be performed.

## Description

The present invention relates to a distributed control apparatus and to a method of transmitting data in a distributed control apparatus. Such an apparatus is suitable for controlling the various functions within a vehicle.

According to a first aspect of the present invention there is provided a distributed control apparatus comprising:
a plurality of controllers, at least one of the controllers having a transmit function for issuing instructions and at least one of the controllers having a receive function for receiving instructions and for executing predetermined functions in response to the instructions; and
a communications link interconnecting the controllers, the controllers being arranged to communicate using a communications protocol having a first word which identifies a class of functions which may be controlled, a second word which identifies which at least one function within the class identified by the first word is to be controlled, and a third word which specifies a change to be made to the at least one function.

It is thus possible to provide a distributed system in which the issuing of a second instruction subsequent to a first instruction related to a different function will not cause the first instruction to be accidentally overwritten.

Preferably at least one of the controllers has both transmit and receive functions implemented therein.

Advantageously one or more of the controllers may be arranged to monitor switch inputs and to transmit messages in response to changes of status of the switch inputs and/or to control the supply of power to loads connected thereto.

Advantageously the system is event driven. Thus the communications link is primarily idle. The communications link is available to all controllers on an asynchronous basis thus delays associated with polling are avoided. In response to a change of status of a control switch or other parameter, relevant data (i.e. data indicative of the change) is transmitted as a message on the communications link and is available to all of the controllers. Each controller may then examine the first word of the message to decide whether the message is relevant to that particular controller or not.

Preferably the communication protocol further includes provision for the transmission of a priority-type word which is used to identify the priority of the message such that, if two or more near simultaneous messages are transmitted onto the communications link, the controller having the highest priority will be given control of the link. The priority-type word may also identify the type of message that is being transmitted. The message may, for example, be a general instruction, a function query, or data transmission or query on a node to node basis.

Advantageously the communications protocol also allows a transmitting controller to identify itself by transmitting an address. Furthermore, each controller responding to a message may be arranged to acknowledge receipt of the message by sending its own address back to the controller which issued the message.

According to a second aspect of the present invention there is provided a vehicle including a distributed control apparatus according to the first aspect of the present invention.

According to a third aspect of the invention, there is provided a method of transmitting instructions in a distributed control apparatus comprising a plurality of controllers sharing a communications link, at least one of the controllers having a transmit function for issuing instructions and at least one of the controllers having a receive function for receiving instructions and for executing predetermined functions in response to the instructions, the method comprising sending instructions containing a first word which identifies a class of functions which may be controlled, a second word which identifies which at least one function within the class identified by the first word is to be controlled, and a third word which specifies a change to be made to the at least one function.

The present invention will be further described, by way of example, with reference to the accompanying drawings, in which:
Figure 1 is a schematic diagram of an automobile incorporating a distributed control apparatus constituting an embodiment of the present invention;
Figure 2 is a diagram showing the message structure used to exchange data between the controllers of the distributed control apparatus;
Figure 3 shows an example of a message in greater detail;
Figure 4 shows an example instruction to close a front left window;
Figure 5 shows an example instruction to close a front right window; and
Figure 6 shows a further message in which four functions are instructed simultaneously.

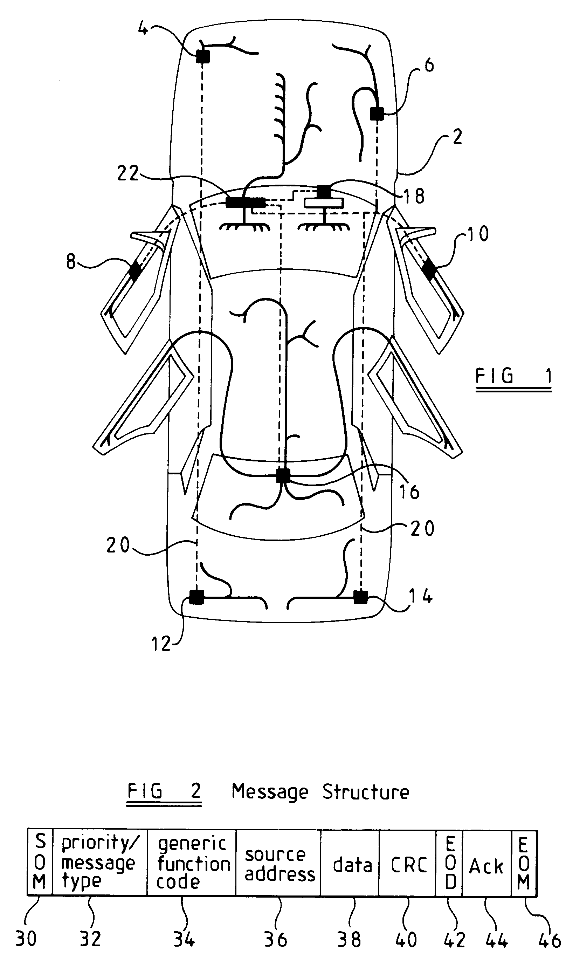

The vehicle 2 shown in Figure 1 has a distributed control apparatus for controlling various vehicle functions. A plurality of controllers 4, 6, 8, 10, 12 ,14, 16 and 18 are interconnected via a data link 20. The controllers can be configured to perform many different tasks local to their positions. In the example shown in Figure 1, the first controller 4 is arranged to control the front left lighting cluster, i.e. side light, dipped head light, main beam, indicator and any further lights that may be provided and headlight wash/wipe functions if they are provided. The second controller 6 is arranged to control the front right light cluster and other local functions. The third and fourth controllers 8 and 10 are arranged to control electric windows, electric wing mirrors and door locks in the left and right front doors, respectively. The fifth and sixth controllers 12 and 14 are arranged to control the left and right rear light clusters, respectively. The seventh controller 16 is arranged to control electric windows and door locks in the rear doors, the rear window demister and passenger compartment lights. The eighth controller 18 located relatively near the instrument panel is arranged to control status indicator lights on the instrument panel and to monitor the status of driver operated command switches, such as the direction indicator switch, light switches, windscreen wiper switches, brake pedal switch and so on, so as to transmit messages indicating the operation of such switches to the other controllers.

The data link 20 is arranged as a star type configuration with a junction box 22 at a central node. The junction box 22 is also arranged to supply two protected power supplies to each of the controllers 4 to 18. Each controller can work from either power feed thereby providing enhanced resistance to a localised power failure.

The eighth controller 18 need not be the only controller able to issue instructions. Thus, for example, the fourth controller 10 may be arranged to issue instructions to all of the controllers associated with electric windows.

Figure 2 shows the message structure used to transmit data between the controllers 4 to 18. The first field of the message is a start of message (SOM), signal 30 which allows all the non-transmitting controllers to synchronise with the message. A second field 32 contains a priority and message type code. Such a code allows non-destructive arbitration to take place when two or more controllers try to send messages almost simultaneously onto the communication link 20. The controller with the highest priority is given control of the communication link. The second field also indicates whether the transmitting controller is sending a message to all of the controllers, whether it is trying to communicate with a specific controller or whether it is requesting information.

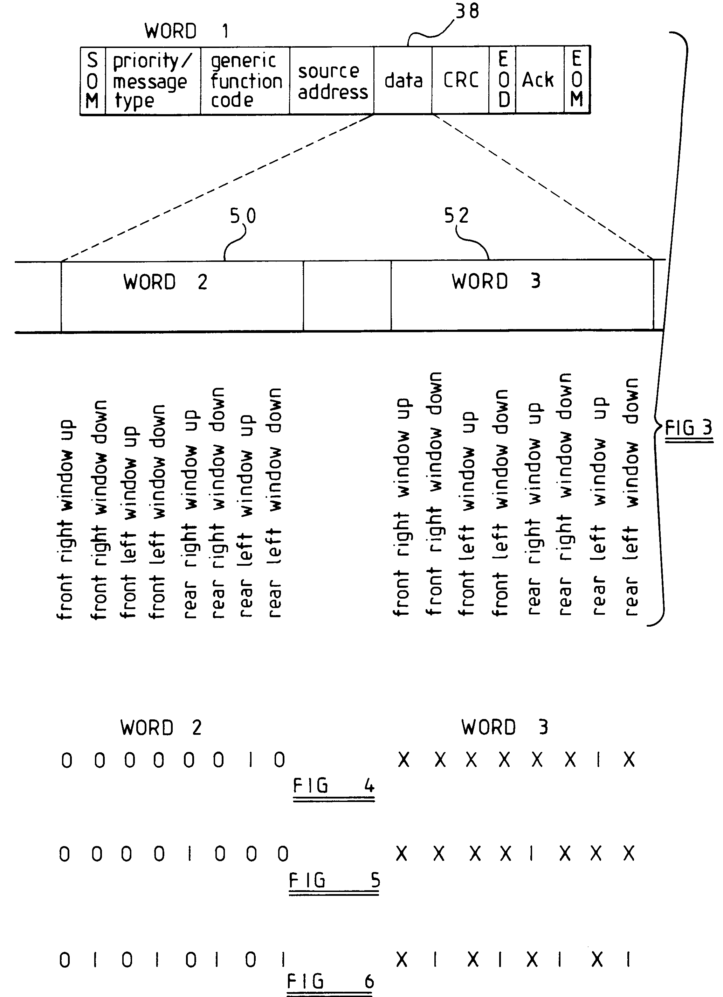

The third field 34 of the message contains a generic function code. Such a code indicates broadly what the subject matter of the message is. For example, one code may indicate that the message is concerned with the control of vehicle lights while another code may be concerned with control of electric windows. Further codes may, amongst other things, relate to locking, mirrors, alarm and ignition functions. The fourth field 36 contains an address of the controller sending the message. The fifth field 38 contains data specific to the operation of individual vehicle functions. The structure of the fifth field will be further explained hereinbelow with reference to Figures 3 to 7. The sixth field 40 contains a cyclic redundancy check (CRC) code which enables the receiving controller or controllers to check that the message has not been corrupted. The seventh field 42 signals the end of the data field (EOD). Following the seventh field, those controllers which are responding to the uncorrupted message acknowledge receipt of the message by transmitting an acknowledgement during the time span assigned to the eighth field 44. The message terminates with an end of message (EOM) signal during the ninth field 46.

A potential problem with distributed control systems is that subsequent transmission of a second instruction having the same generic function code as a previously transmitted first instruction could overwrite the first instruction. Suppose for example, that control of the electric windows of a vehicle (in this example a right hand drive vehicle) was performed in accordance with a control word where the seventh bit controlled the upward motion of the rear left window, the eighth bit controlled the downward motion of the rear left window, the fifth bit controlled the upward motion of the rear right window and the sixth bit controlled the downward motion of the rear right window. With only one data byte transmitted, if the driver decides that he wants the rear right window up, he presses a control switch which causes a code 00001000 to be issued to raise the rear right window. Now if the passenger then decides that he wants the rear left window up, he presses a control button which sends a code 00000010. Since all window controllers respond to the same generic function code, the rear window controller will overwrite the code 00001000 with the new code 00000010, thus cancelling the closing operation of the rear right window. Similar problems could occur in the control of lighting functions or of any functional group and could be hazardous. For example, lights could be switched off.

Such a problem could be overcome by having the transmitting controllers monitor all messages sent by all other transmitting controllers. Thus the controller responsible for issuing the code to close the rear left window would replicate the earlier message and send a modified code 00001010. This increases controller complexity, especially in systems where a lot of functions exist and can be controlled from many different controllers.

The problem can be overcome without having to make each controller monitor the preceding instructions issued by every other controller by changing the way in which data in the fifth field 38 is transmitted.

Figure 3 shows the data field 38 in greater detail. When a message is transmitted, it contains a first word, i.e. the generic function code, which identifies a class of functions which are to be controlled. In this example, the generic function code relates to the control of the electric windows. The data field contains two further words, i.e. second and third words 50 and 52, relating to the control of the windows. In each of the second and third words, the first bit controls the raising of the front right window and the second bit controls the lowering of the front right window. The third and fourth bits control the raising and lowering, respectively, of the front left window. The fifth and sixth bits control the raising and lowering, respectively, of the rear right window, and the seventh and eighth bits control the raising and lowering, respectively, of the rear left window.

The second word 50 acts as a mask with respect to the third word 52.

Thus, when the passenger wants the rear left window up, he presses a switch which causes a controller responsive to the switch to send a message having the second and third words set as shown in Figure 4. Only the seventh bit of the second word is set to a "1". Consequently only the seventh bit of the third word is examined by a controller responding to the message and the status of all the other bits in the third word is irrelevant, as indicated by "X" for those bits. Thus all other loads remain in their present state. On finding that the seventh bit of the third word is set to "1", the controller responsible for controlling the rear left window operates a motor to raise the window.

If the driver then decides to raise the rear right window while the rear left window is still in motion, he presses a control switch which causes a controller responsive to that control switch to send the code shown in Figure 5. The fifth bit of each of the second and third words is relevant to the raising of the rear right window. Since only the fifth bit of the second word is set to "1", only the fifth bit of the third word is examined. On finding that the fifth bit of the third word is set, the controller responsible for controlling the rear right window operates a motor to raise the rear right window, leaving the rear left window unaffected (in this case still rising).

If it is desired to halt the motion of the rear right window in response to operation of a switch, the transmitting controller sends a message in which the second word is 00001000 and the third word is XXXX0XXX.

The control system is not limited to issuing single commands. For example, a command may be issued within a single message to lower all the windows. Such a command requires the second and third words to be set as shown in Figure 6.

Such an arrangement provides that any combination of instructions sharing a common generic function code can be transmitted simultaneously and without overwriting each other. Furthermore since individual instructions do not have to be transmitted sequentially, the communications link is less busy and latency times within the whole system are reduced. Additionally the data structure avoids the need for each controller capable of sending signals to keep a check on the status of all previous instructions in order to avoid overwriting an instruction. Thus, the arrangement is reliable while maintaining a high degree of flexibility.

## Claims

1. A distributed control apparatus, characterised by:
a plurality of controllers (4, 6, 8, 10, 12, 14, 16, 18), at least one of the controllers (4 - 18) having a transmit function for issuing instructions and at least one of the controllers (4-18) having a receive function for receiving instructions and for executing predetermined functions in response to the instructions; and
a communication link (20) interconnecting the controllers (4-18), the controllers being arranged to communicate using a communications protocol having a first word (34) which identifies a class of functions which may be controlled, a second word (50) which identifies which at least one function within the class identified by the first word is to be controlled, and a third word (52) which specifies the change to be made to the at least one function.

2. A distributed control apparatus as claimed in Claim 1, characterised in that at least one of the controllers (4-18) has both transmit and receive functions implemented therein.

3. A distributed control apparatus as claimed in Claim 1 or 2, characterised in that at least one of the controllers (4-18) is arranged to monitor switch inputs and to transmit messages in response to changes of status of the switch inputs and/or to control the supply of power to loads connected thereto.

4. A distributed control apparatus as claimed in any one of the preceding claims, characterised in that the apparatus is event driven.

5. A distributed control apparatus as claimed in any one of the preceding claims, characterised in that the communications protocol further comprises a priority-type word which is used to identify the priority of a message such that, when two or more near simultaneous messages are transmitted onto the communications link, the controller having the highest priority is given control of the communications link (20).

6. A distributed control apparatus as claimed in Claim 5, characterised in that the priority-type word identifies the type of message that is transmitted.

7. A distributed control apparatus as claimed in any one of the preceding claims, characterised in that the communications protocol further comprises an address of the controller (4-18) transmitting a message, and each controller (4-18) responding to the message acknowledges receipt of the message by sending back its own address.

8. A vehicle characterised by including a distributed control apparatus as claimed in any one of the preceding claims.

9. A method of transmitting instructions in a distributed control apparatus characterised by comprising a plurality of controllers sharing a communications link, at least one of the controllers having a transmit function for issuing instructions and at least one of the controllers having a receive function for receiving instructions and for executing predetermined functions in response to the instructions, the method comprising sending instructions containing a first word (34) which identifies a class of functions which may be controlled, a second word (50) which identifies which at least one function within the class identified by the first word is to be controlled, and a third word (52) which specifies the change to be made to the at least one function.

10. A method as claimed in Claim 9, characterised in that the sending of instructions is event driven.

11. A method as claimed in Claim 9 or 10, characterised in that the method further includes the sending of at least one of the following:
a priority-type word for identifying the type of message being sent and/or for identifying the priority of the message such that when two or more near simultaneous messages are transmitted onto the communications link, the controller with the highest priority is given control of the communications link;
an address identifying the controller sending a message; and
transmission of an address of the or each controller responding to a message.
